# EUROPEAN PATENT SPECIFICATION

(11) **EP 0 968 613 B1**
(45) Date of publication and mention of the grant of the patent: **15.10.2008**
(21) Application number: 98911323.8
(22) Date of filing: 16.03.1998
(51) Int. Cl.: H04N 7/62, H04L 12/56, H04Q 11/04

(54) **TRANSMISSION OF MPEG-ENCODED DATA IN ATM-SYSTEMS**
ÜBERTRAGUNG VON MPEG-KODIERTEN DATEN IN ATM-SYSTEMEN
TRANSMISSION DE DONNEES CODEES MPEG, DANS DES SYSTEMES MTA

(30) Priority: 18.03.1997 SE 9700981
(43) Date of publication of application: 05.01.2000
(73) Proprietor: TELIASONERA AB, 123 86 Farsta (SE)
(72) Inventor: THOLIN, Per, S-126 52 Hägersten (SE); BAHLENBERG, Gunnar, S-976 32 Lule (SE); DILLNER, Erik, S-120 55 Arsta (SE); JOHANSSON, Magnus, S-972 41 Lule (SE); LJUNGGREN, Lis-Marie, S-977 53 Lule (SE); TONVALL, Harry, S-984 31 Pajala (SE); WESTER, Per-Ola, S-121 30 Enskede (SE)
(74) Representative: Akerman, Marten Lennart
(86) International application number: PCT/SE1998/000479
(87) International publication number: WO 1998/042140

(56) References cited:
- EP-A- 0 577 329
- EP-A- 0 720 410
- EP-A- 0 735 776
- EP-A- 0 738 083
- US-A- 5 563 884
- US-A- 5 565 928
- US-A- 5 594 492

## Description

The invention relates to a MPEG-2 (Motion Picture Expert Group) broadband multimedia terminal for audiovisual communication, or distribution, and to a MPEG-2 encoder and a MPEG-2 decoder for the broadband multimedia terminal.

MPEG-2, or ISO/IEC IS 13818, which is the official name of an international standard (IS) promulgated by the International Organisation for Standards (ISO)/International Electrotechnical Commission (IEC), constitutes a key standard for high quality audiovisual communication and distribution. A number of other standards and/or recommendations make use of MPEG-2 for encoding and multiplexing, for example, the recommendation promulgated by the International Telecommunication Union (ITU), namely, ITU-T Rec. H.310 which constitutes a terminal specification for broadband audiovisual communication over ATM.

Systems for effecting broadband audiovisual communication over ATM are known, see for example, 'The AMPEC System: A Broadband Multimedia Terminals Supporting High Definition Audiovisual Communications - Bo Burman, Telia Research AB, Session 1.4 of the 7^{th} World Telecommunications Forum, Geneva 3-11 October 1995. AMPEC is a Telia Proprietary Broadband Multimedia Terminal.

Known packet switched systems, such as ATM, for the communication of high quality audio-visual multimedia services are, as outlined in the World Telecommunications Forum paper referred to above, usually built around a standard workstation, for example, a personal computer (PC), which effects two-way communication with an ATM Adaption Layer (AAL). The audio and video signals from a video recorder are encoded, i.e. the encoder performs packeting and multiplexing of audio and video elementary streams (ES), in accordance with MPEG-2 System and H.222.1, under the control of a system controller. The encoded signals are inputted, via a packet based parallel interface, to the AAL which implements AAL Type 1 (AAL 1) and has the capability to process four parallel channels and further transmitted ATM Physical layer over an ATM Network. A MPEG-2 decoder is connected to the receiving sides AAL decoder and includes a demultiplexer which effects, inter alia, recovery of the System Time Clock (STC) and audio, video and data signals. These signals are applied either to a separate monitor, for example, an HDTV (High Definition Television)/multichannel television, or to a workstation, i.e. the decoded video signal is displayed either on a separate monitor, or in the window system of a workstation by means of a video display board. The workstation may also be provided with an ATM adapter in order to allow direct exchange of private information, (i.e. not audio and video streams, but data allowing, for example, use of shared text areas), without going through the system multiplexer.

With a system arrangement for the transmission of MPEG-2 over ATM, a multiplexed MPEG-2 transport/program stream is delivered to the ATM Adaption Layer (AAL), via a packet based parallel interface, where it is split up into cells for transmission. With this method of operation, there is a risk that delay variations will be introduced before transmission is effected. Furthermore, the system stream must be divided into different parts, based on its contents, in order to fully utilize the possibilities which the Virtual Channel Identifiers (VCIs) offer, for example, audio and video are transmitted over different Virtual Channels (VCs).

ATM is a connection oriented, packet switched technique, i.e. a connection is established between endpoint terminal equipments before any data is transferred, and once this connection has been established, the ATM cells are self routing, i.e. the cells contain necessary addressing information.

The Physical Layer of an ATM layer model, as with other networks, serves as an interface to the physical media, for example, optical or electrical, and performs, in essence, a conversion between the bit stream of the network and a cell stream of the ATM Layer which is at the heart of the ATM network. The ATM Adaption Layer (AAL) which can be considered as a conversion function between higher layers and the ATM Layer by generating the ATM cells from the data passed to it by the higher layers, is divided into a number of types, each one of which is adapted to support different kinds of traffic

With MPEG-2, when encoded data enters the MPEG-2 System Layer, the data is packetized into Packetized Elementary Streams (PES) which are multiplexed into either a Transport Stream, or a Program Stream, depending on the application, i.e. each of these streams is intended for use with different types of application. Thus, the purpose of the MPEG-2 System Layer is to combine one, or more, elementary streams of video, audio, or other data, into single, or multiple, packet-oriented multiplexed streams. Furthermore, synchronised decoding, with neither underflow, nor overflow, of the decoding buffers, is effected by adding time stamps for decoding and presentation of audio and video data and time stamps concerning delivery of the data streams.

In essence, streams of presentation units, which are generated from an original audio and/or video source, are the uncoded representations of pictures, or audio frames, and the encoding of the presentation unit streams results in a stream of access units, i.e. access units are the coded representations of presentation units. An elementary stream is another name for a stream of access units. In other words, each audio, or video, source results in an elementary stream having a time base dictated by the clock used to sample the audio/visual signal. Elementary streams which are related to each other, are grouped into a program. The streams of a program must have the same time base.

In practice, one, or more, Packetized Elementary Streams (PES), originating from different sources, are combined into a single Transport Stream and each PES contains information from only one elementary stream, which in turn can have only one time base. The Transport Stream, when it includes different PESs, allows the different PESs to have different time bases, implying that a Transport Stream can contain several independent time bases. A consequence of this is that the Transport Stream must include information supporting the recreation of multiple independent time bases.

The streams of a MPEG-2 System Layer can be thought of as being divided into sub-layers, namely, a Transport Stream Layer, a Program Stream Layer and a PES Layer. US5 563 884 A relates to an ATM/MPEG system that receives MPEG program with different bit rates from any number of servers. The programs are converted into ATM cells and are transmitted over an ATM network at a constant bit rate. At the end of an ATM packet, consisting of 188 byte MPEG packets (eight ATM cells) there are provided eight extra bytes that may be used for error detection or correction. The invention consists of a MPEh-2 encoder for use with ATM transmission system as defined by the attached claims.

The foregoing and other features according to the present invention will be better understood from the following description with reference to the accompanying drawings, in which:
Figure 1 illustrates the division of a MPEG-2 transport packet into four cells adapted for ATM AAL Type 1 (AAL1);
Figure 2 illustrates the division of a MPEG-2 transport packet into four cells adapted for AAL1, in which each of the divided cells includes a status byte in order to simplify the assembly of cell headers;
Figure 3 illustrates an example of multiplexing on a cell basis;
Figure 4 illustrates, in the form of a block diagram, the architecture for realisation of ATM-adapted system layer demultiplexing in a MPEG-2 decoder, according to the present invention; and
Figure 5 shows a PSI (Program Specific Information) table.

The present invention is concerned with a MPEG-2 broadband multimedia terminal, a MPEG-2 encoder and a MPEG-2 decoder, together with related methods for ATM-adapted system layer multiplexing and demultiplexing in MPEG-2. In a broadband audiovisual terminal which implements a MPEG-2 real time encoder, the packeting and multiplexing of the different elementary streams (ES), i.e. audio, video etc., will be related to the functionality in the standard. This is defined by MPEG-2 Systems. ISO/IEC IS 13818-1. However, the standard does not contain any details concerning adaption of the transmission channel to be used for the transmission of encoded data.

Since MPEG-2 is a high quality picture compression standard, it requires broadband transmission. Thus, ATM is one of the more important technologies for transmission of MPEG-2 coded audiovisual information.

When considering the manner in which MPEG-2 should be transmitted over ATM, it becomes apparent that the data packets which are created by MPEG-2, will be split up into cells and provided with cell headers in ATM. It will be seen from subsequent description that division and processing is effected in the AAL. The implications of this are that additional calculating capacity is needed to divide the packets. Also, new cell headers have to be added. Furthermore, this process requires some of the information used for performing system layer multiplexing.

In MPEG-2, the data packet transport stream, transmitted over a channel, contains time stamps to facilitate recovery of the 27 MHz System Time Clock (STC). Thus, in order to prevent problems with clock recovery, it is desirable to ensure that the transmission delay variations are kept to a minimum.

In ATM, it is possible to transmit different types of data over different virtual channels (VC). This facility allows different channel characteristics to be used for different types of data. It can also be used, for example, in a video conferencing application, to transmit different media combinations to different receivers. A pure audio terminal can, therefore, be used in a multiparty video conference with, however, the restriction that only the audio component can be decoded.

Thus, AAL and other ATM-layers contain, as stated above, functionality to multiplex information by allocating different VCIs (possibly also different VPIs) to the different streams, i.e in the 'normal' case, a terminal consequently includes a mechanism, in the AAL, which divides packets of higher layers and multiplexes the different streams. If MPEG-2 transport steams are to be carried in this way, then such streams will have to be transmitted on different logical channels, from the system layer multiplexer to the AAL, for further processing. This requires either a number of parallel buses, or, in accordance with the present invention, a special multiplexing mechanism to share a common bus between the different streams.

In order to effectively reduce the complexity of the calculations which are required to divide the complete MPEG-2 transport packets into AAL payload units and thereafter into ATM cells, the division is effected as an integral part of MPEG-2 packeting and multiplexing. In other words, the MPEG-2 transport packet is made in a number of steps, wherein each step consists of making part of the MPEG-2 transport packet into a corresponding cell. In AAL1, the process for dividing packets from higher layers into AAL payload units is called 'segmentation'.

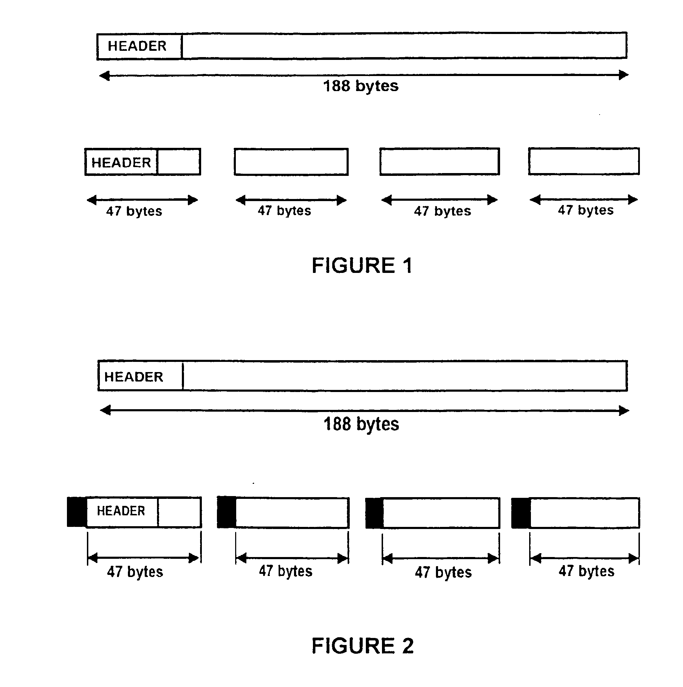

An example of how this can be achieved is illustrated in Figure 1 of the accompanying drawings. As shown in Figure 1, instead of producing a normal PEG-2 transport packet of 188 bytes, the transport packet formation process is effected in four cycles wherein a MPEG-2 transport packet of 47 bytes, adapted for ATM AAL Type 1 (AAL 1), is produced during each of the four cycles, i.e. an AAL 1 payload unit is produced during each of the four cycles. In other words, the length of the transport packet is based on the ATM cell payload being 47 bytes (or actually AAL Type 1 (AAL 1) SDU (Segmentation Data Unit) - see 'B-ISDN Adaption Layer (AAL) Function Description', ITU-T Rec. I.362), i.e. one MPEG-2 transport packet should fit into four ATM cells. As illustrated in Figure 1, that part of the 188 byte MPEG-2 transport packet which contains a SAR-PDU (Segmentation and Reassembly - Protocol Data Unit) Header is contained within the payload of the first one of the AAL 1 payload units. The 47 byte MPEG-2 transport packets, or AAL 1 payload units, are each inputted to the ATM Adaption Layer (AAL), the function of which is to convert the MPEG-2 transport packets into ATM cell payloads and provide the necessary headers, i.e. the segmentation process AAL 1 disappears.

The process outlined above efficiently eliminates the problem with different channels for the case in which it is intended to use more than one Virtual Path Identifier (VPI)/Virtual Circuit Identifier (VCI) - see below. Each ATM cell header has two fields containing the VPI and the VCI. The Virtual Path can be compared to the trunk line of a telephone network, where it bundles together a number of Virtual Circuits. Groups of channels with different VCIs but the same VPI are directed over the same nodes of the network. This makes it possible for a user to create a virtual private network.

There are number of advantages to be gained from making the MPEG-2 packets in cell-adapted form, for example:
(1) By making the packets in complete cell-blocks, redundant calculation complexity, which occurs when a newly made packet is divided into cells, is completely eliminated - the segmentation process in AAL1 is consequently not needed.
(2) In the mechanism which changes the packets into cells, it will, in the 'normal' case, probably be necessary to provide some kind of buffering for absorbing the effects which occur when the larger transport packets arrive at the mechanism to be thereafter divided into AAL payload units and cells. This type of buffering introduces the risk of creating delay variations (jitter) - something which it is desirable to minimize at transmission of MPEG-2 encoded data. It is also desirable to avoid buffering to avoid delays.
(3) At the division of the packets into AAL payload units/cells, it makes it possible for multiplexing to be effected on a cell basis, instead of on a packet basis, in the system layer, which directly supports the transmission of data on different VCIs. The implications of this are, among other things:
   - elimination of the multiplexing functionality in AAL, which simplifies implementation;
   - shorter buffering in the receiver system; and
   - possibilities for more even distribution of data on each VCI, in other words, more even traffic characteristics since, for instance, a transport packet need not result in a burst of four cells.
(4) For the multi-VCI case, referred to above, it is normally required that different streams are transmitted from the system layer multiplexer to the AAL over different logical channels, this means that either parallel buses are implemented in the encoder, or that a special multiplexing mechanism is introduced, if one data bus is used between system layer multiplexing and the AAL. In accordance with the present invention, this problem is eliminated since the multiplexing of the different transport streams, which otherwise would have been made by the AAL, has already been made by the system layer multiplexer.
(5) At the reception of data on the decoder side of the system, de-jittering may be needed to reduce delay variations which occur at transmission. This can best be achieved if de-jittering can be effected on a cell basis, in AAL, instead of on a transport packet basis. With such an arrangement, an Adaptive Clock implementation can operate with a higher rate because a new 'measuring value' will be received for each cell.

In order to further simplify the ATM-packeting process, each block of cells can, as illustrated in Figure 2 of the accompanying drawings, be provided with an extra starting byte, called a status byte, in the MPEG-2 packeting. As a result of this, the MPEG-2 packeting function can provide information, concerning the content of each cell, to the functions which assemble the SAR-PDU header and the headers to the ATM-cells. This makes it is possible to totally eliminate the need to analyse the incoming cells in AAL processing for the purpose of correctly assembling the headers

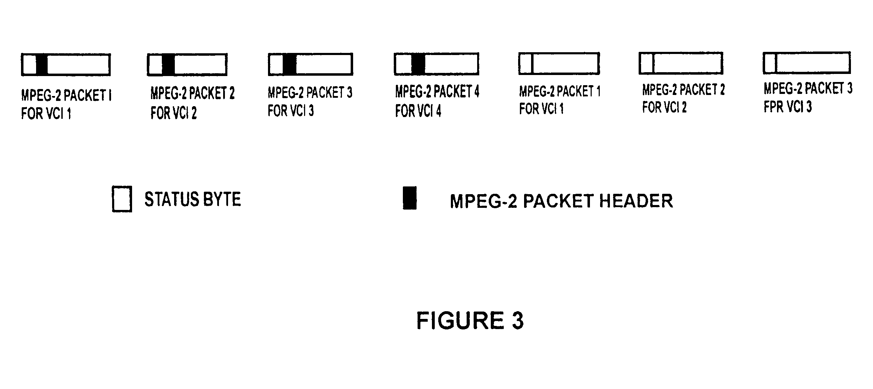

The status byte can be designed in different ways, depending on which AAL is to be used, and which information is needed to make a trailer, if required, for a corresponding AAL header. However, the status byte is required if, as illustrated in Figure 3 of the accompanying drawings, multiplexing is effected on a cell basis to indicate the channel (and thereby the VCI) over which the respective cell is intended to be transmitted, i.e. as illustrated in Figure 3, MPEG-2 packets 1 to 4 are respectively transmitted on VCIs 1 to 4. Typically only a small number of channels need to be discerned, for instance up to 16, in a broadband multimedia terminal, i.e. the whole 'VCI-range' need not be represented. The status byte can also be used to indicate if the cell contains a MPEG-2 packet header, or its relative priority. Other information depends on what is optimal for the production of the cell headers.

By adding a status byte to the MPEG-2 packets, the following is achieved:
(1) Elimination of redundant production of information, which is already known in previous packeting steps, results in minimal processing of data for the assembly of headers. This in turn results in a reduced complexity on the AAL-parts and ATM-parts.
(2) By processing a status byte in the steps which implement AAL-layers and ATM-layers, it is possible to achieve a simple and fixed calculation pattern for each cell, which results in reduced risk of delay variations due to different calculation times depending on content of the cell.

Thus, a MPEG-2 encoder, according to the present invention, for use with data packet transmission systems, has an architecture for implementation of ATM-adapted system layer multiplexing in MPEG-2. Furthermore, the encoder includes a multiplexing unit for packeting and multiplexing audio and video signals, in accordance with MPEG-2, and for generating a MPEG-2 transport steam for application to an ATM Adaption Layer (AAL). In accordance with this aspect of the present invention, the multiplexing unit is adapted to divide each MPEG-2 data packet, in the MPEG-2 transport stream, into a number of separate data packets for application to said AAL, the division preferably being effected as an integral part of MPEG-2 packeting and multiplexing, add a status byte to each of said data packets prior to transmission to said AAL; and transmit each of the data packets, divided out of a MPEG-2 data packet in said MPEG-2 transport stream, over a different virtual channel.

It will be directly evident from the foregoing description of the MPEG-2 encoder of the present invention that a process is described for use in the realizations of a MPEG-2 system layer multiplexer. The multiplexer can, by means of the invention, better "prepare" the system stream for ATM-transmission, which has a number of advantages from realization and performance points of view.

It will also be seen from the foregoing description that the present invention provides an ATM-adaption of the packet composition in the MPEG-2 system layer. By performing the operation in accordance with the invention it is possible, among other things, to reduce the risks for self-inducing delay variations, extend the possibilities of use of VCI, and allow multiplexing on an ATM cell basis instead of on a MPEG-2 packet basis.

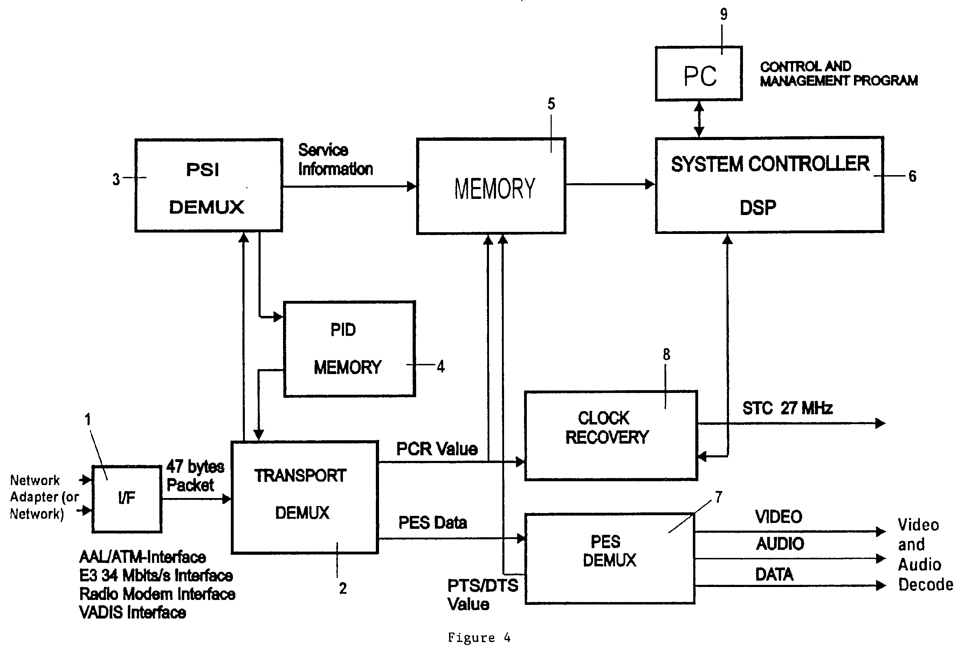

A MPEG-2 decoder and, more particularly, an architecture for implementation of, and a method for, ATM-adapted system layer demultiplexing in a MPEG-2 decoder, i.e. a Transport Stream demultiplexer and decoder (transport stream demultiplexing), is diagrammatically illustrated in Figure 4 of the accompany drawings, in the form of block diagram. It will be seen from Figure 4 that the implementation architecture includes an Interface Unit 1 which represents a number of different interfaces with which the system layer demultiplexer is equipped, for example, an AAL/ATM interface, an E3 34 Mbits/s interface, a Radio modem interface, or a VADIS interface. Data is received at the Interface Unit 1 either serially (Radio modem interface, especially E3 34 Mbits/s interface), or in parallel (AAL/ATM interface and VADIS interface). The data format is specific for the respective network adapter/network to which the interface Unit 1 is connected. The Interface Unit 1, the output of which is connected to a Transport Layer Demultiplexer 2, is adapted to modify the inputted data format so that it becomes uniform and follows the format which is used over the AAL/ATM interface, i.e. the data is in the form of data blocks. As indicated in Figure 1, this format consists of data packets, each one of which is of 47 bytes. In addition, each data block, or packet, is always preceded by an extra byte, a so called status byte.

A data packet, at the output of the Interface Unit 1, contains part of a MPEG-2 Transport Stream Packet, a complete Transport Stream Packet, which has a length of 188 bytes, being formed by four data packets. It should be noted that a single Transport Stream Packet is not necessarily distributed over, or formed by, four consecutive data packets, because a number of logical channels can be received at the same time, i.e. two consecutive data packets could belong to different transport streams.

An AAL/ATM interface provides an interface towards an external network adapter. Thus, the AAL/ATM interface is used when the system layer demultiplexer receives MPEG-2 Transport Streams (TS) which have been transmitted over ATM.

It should be noted that the system layer demultiplexer, whilst adapted to function in an 'ATM-adapted mode', can function with interfaces, other than the AAL/ATM interface, for example, the E3 34 Mbit/s Modem interface, which consists of a PDH-interface where the MPEG-2 Transport Stream (TS) is mapped down in a special frame structure according to G.751.

Thus, the data blocks, at the output of the Interface Unit 1, contains audio visual information, at least two types of time stamp, namely, Program Clock Reference (PCR) and Presentation Time Stamp (PTS), and is preferably in the form of 47 byte data packets.

As illustrated in Figure 4, each of the data blocks, forming part of a MPEG-2 Transport Stream (TS), is applied to the Transport Stream Demultiplexer 2 which is adapted to demultiplex and decode the TS-layer (but not the PES (Program Elementary Stream)-layer) and to decode the status byte.

Program Specific Information (PSI), extracted by the Demultiplexer 2, is forwarded to a PSI Demultiplexer 3. The task of the PSI Demultiplexer 3 is to read in the PSI tables from the transport stream. The PSI-tables can contain four tables, namely:
- Program Association Table (PAT);
- TS Program Map Table (PMT);
- Network Information Table (NIT); and
- Conditional Access Table (CAT).

The contents of the PAT, PMT and CAT tables are specified in the ITU-T Rec. H.222.0 : ISO/IEC 13818-1 standards. The NIT table is a private table, but the PID value of the Transport Stream packets which carry it, is specified in the PAT table. This table must, however, follow the section structure defined in the standards. Each section of the tables is uniquely identified by a combination of elements.

Each transport stream must contain a complete valid Program Association Table (PAT) which gives the correlation between the program-number and the Packet Identifier (PID) of the Transport Stream Packet which carries the definition of the program (PMT-PID). The TS Program Map Table gives the mapping between a program-number and the program elements which it contains. The Conditional Access Table gives the association between one, or more, CA-systems, their EMM-streams and other special parameters which are associated with them. The Network Information Table contains information concerning, for instance, channel frequency, satellite transponder number, type of modulation etc..

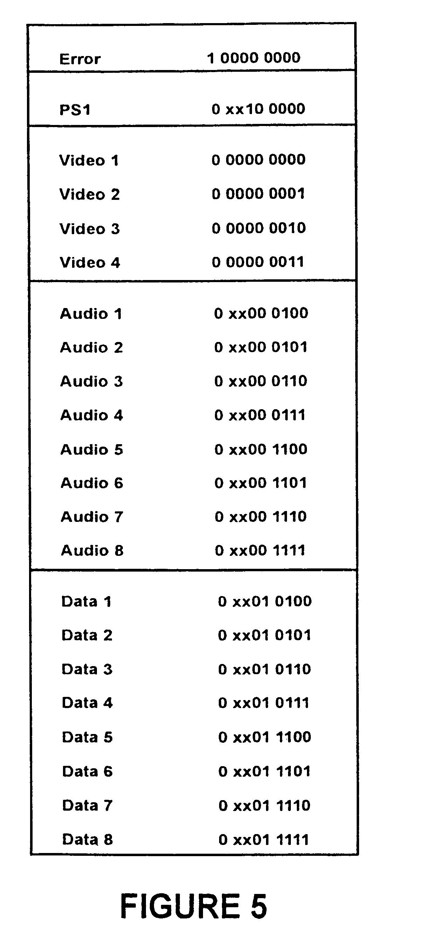

PAT gives information about the PID-value of each PMT. This information is written into the Dual-Port Memory 4, according to the table, shown in Figure 5 of the drawings. The addressing to the Dual Port Memory 4 consists of a PID-value (each PMT has its unique address PID-value). After the reception of a PAT, at least one PMT can be received. PMT gives information about the PID-value or each elementary stream (each elementary stream also has its unique address PID-value).

Thus, PAT gives information about how many programs a program stream contains and PMT gives information about which elementary streams (ES) each program contains. An example of an elementary stream is a video stream which consequently is a byte stream which contains video coded information according to MPEG-2 Video, ISO/IEC IS 13818-2. This information is, as illustrated in Figure 4, written into a Dual Port Memory 4, according to the table of Figure 5. The 'XX' (see Figure 5) indicates which program the elementary stream is associated with. The addressing to the Dual Port Memory 4 consists of a PID-value (as stated above, each elementary stream has its unique address PID-value). The output of the Dual Port Memory 4 is applied to the Transport Demultiplexer 2.

As illustrated in Figure 4, all Service Information (SI) is written into a Memory 5, an output of which is connected to an input of a System Controller 6, i.e. a Digital Signal Processor (DSP), adapted for two-way communication with a PC (Personal Computer) 9 which is external to the transport stream demultiplexer and decoder. The Service Information (SI), after being written into the Memory 5, is controlled by the System Controller 6. The SI is used to inform users about the contents of the program etc.. The System Controller 6 preferably utilises a TMS320C50 from Texas Instruments.

The outputs of the Transport Stream Demultiplexer 2 which are respectively the Program Clock Reference (PCR) value and the Packetized Elementary Stream (PES) data, are, as is illustrated in Figure 4 of the drawings, respectively applied to a PES Demultiplexer 7 and a Clock Recovery Block 8 which is adapted for two way communication with the System Controller 6.

Thus, the next layer to be decoded is the PES-layer and this is effected by the PES Demultiplexer 7. The function of the PES Demultiplexer 7 is to parses out the PTS (Presentation Time Stamp) and DTS (Decoding Time Stamp) values, associated with current presentation units, in respective elementary streams. An example of a presentation unit is a decoded picture which consequently has a PTS value associated therewith. The PTS/DTS values, which are used in the video/audio-decoder to present the pictures/sounds at the right point in time, are written into the Memory 5 and are thereafter under the control of the System Controller 6.

In the Clock Recovery Block 8, the clock (27 MHz) of the coder is recreated by means of the received PCR-values. The arrow designated 'STC 27 MHz', in Figure 4, indicates that, on the one hand, information concerning the current value of the recreated System Time Clock (STC), i.e. the value of the local PCR-counter, is transmitted to a audio/video decoder sub-system (not illustrated) where decoding or the elementary streams is effected, and, on the other hand, that just the 27 MHz frequency is used to recreate video sampling rate, analog video sync. signal etc..

The video, audio and data signals, at the output of the PES Demultiplexer 7, are applied to the audio/video decoder sub-system (not illustrated). The decoded signals can be applied either to a separate monitor, for example, a HDTV (High Definition Television), or to the PC, the decoded video signal being displayed on the separate monitor, or in the window system of the PC by means of a video display board.

All control of the demultiplexing and communication with the PC 9 is managed by the System Controller 6. It also handles Service Information (SI), which contains information about the current programs, and which is used to inform a viewer about program content, start times of programs etc..

All hardware to demultiplex the transport stream is realized in FPGA (Field Programmable Gate Array). The FPGA card uses four FLEX 8000 and three MAX 7000 from Altera.

It will be seen from the foregoing description, and Figure 4 of the accompanying drawings, that a MPEG-2 decoder, according to the present invention, for use with an ATM transmission system, includes a demultiplexing and decoding unit for generating audio, visual and data signals for application to a display unit, and that the demultiplexing and decoding unit includes:
- an interface unit 1 adapted to modify the format of a MPEG-2 Transport Stream (TS) into AAL/ATM data block format, each data block containing part of a MPEG-2 TS Packet;
- a transport layer demultiplexer 2 to which the data blocks are applied, said transport layer demultiplexer being adapted to demultiplex and decode a TS-layer, but not a Program Elementary Stream (PES)-layer, and to extract Program Specific Information (PSI) from the data blocks;
- a PSI demultiplexer 3, to which the extracted PSI information is applied, said PSI demultiplexer being adapted to read in the PSI tables from said transport stream;
- a dual port memory 4 for storing information derived from said PSI tables, an output of said memory being connected to an input of said transport demultiplexer;
- a PES demultiplexer 7 adapted to parse out Presentation Time Stamp (PTS) and Decoding Time Stamp (DTS) values from PES data streams, and to generate said audio, visual and data signals for application to a display unit;
- clock recovery means 8 for recreating the system clock on receipt of Program Clock Reference (PCR) values;
- memory means 5 for storing said PTS, DTS and PCR values, and service information provided by said PSI demultiplexer; and
- a system controller 6 for managing said service information, communication between said MPEG-2 decoder and a workstation, and control of demultiplexing.

It will also be seen from the foregoing that, in a preferred arrangement, each of the data blocks, at the output of the interface unit of the decoder, is preceded by a status byte which is decoded by the transport layer demultiplexer 2.

In a multimedia broadband audiovisual terminal, according to the present invention, which implements a MPEG-2 decoder, it will be seen from the foregoing that system layer decoding is effected, as a first step, and includes, among other things, demultiplexing of the different elementary streams, i.e. audio, video etc., contained within the system layer. This is defined, as stated above, by the MPEG-2 Systems; ISO/IEC Standards IS 13818-1, but the standard does not, however, contain any details concerning adaption of the transmission channel. ATM, as also stated above, is one of the more important technologies for the transmission of MPEG-2 coded audiovisual information.

The, AAL-layers and ATM-layers include, as stated above, functionality to multiplex information by allocating different VCIs (possibly also different VPIs) to the different streams, i.e in the `normal' case, a broadband audiovisual terminal consequently includes a mechanism, in the AAL decoder, which demultiplexes the different streams and recreates ('reassembles') the packets for higher layers by concatenating current AAL payload units. If MPEG-2 transport steams are to be carried in this way, then the transport packets will have to be recreated, in the same manner, and be thereafter transmitted on different logical channels to the system layer demultiplexer for further processing.

Also, in MPEG-2, the data packet transport stream, transmitted over a channel, contains time stamps to facilitate recovery of the 27 MHz System Time Clock (STC). Thus, in order to prevent problems with clock recovery, it is desirable to ensure that the transmission delay variations are kept to a minimum.

In order to effectively reduce the complexity of the calculations which are required to convert AAL SAR-PDU (Segmentation and Reassembly - Protocol Data Unit) payload units, which have been extracted from the ATM cells, into MPEG-2 transport packets, the conversion is effected as an integral part of MPEG-2 demultiplexing. In other words, the demultiplexing is effected on a 'cell basis' instead of the normal 188 bytes MPEG-2 transport packet demultiplexing. This will result in the omission, in AAL1, of the reassembly process.

There are a number of advantages to be gained from demultiplexing MPEG-2 packets in cell-adapted form, for example:
(1) Demultiplexing the packets in a cell-adapted form, effectively eliminates redundant calculation complexity for the reassembly process.
(2) In the mechanism which normally converts SAR-PDU payloads into MPEG-2 transport packets, it will, in the 'normal' case, probably be necessary to provide some kind of buffering Such buttering introduces the risk of creating delay variations (jitter) - something which it is desirable to minimize at transmission of Peg-2 transport packets and which can be avoided by the present invention.
(3) When a multiplicity of VCs are used, the ATM layer and AAL would normally have a demultiplexing function. In accordance with the present invention, the need for this is eliminated and further reduces the need for buffering.
(4) For the multi-VC case, referred to above, it is normally required that different streams are transmitted from the AAL to the system layer demultiplexer over different logical channels. This requires that either parallel buses are implemented in the decoder, or that a multiplexing mechanism is introduced, if one data bus is used between the AAL and the system layer demultiplexer. In accordance with the present invention, this problem is eliminated since the demultiplexing of the different transport streams is effected by the system layer demultiplexer.
(5) When data is received on the decoder side, de-jittering may be needed to reduce delay variations which occur at transmission. This can best be achieved if de-jittering can be effected on a cell basis, in AAL, instead of on a transport packet basis, because, with such an arrangement, an Adaptive Clock implementation can operate with a higher rate since a new 'measuring value' will be received for each cell.
(6) The present invention naturally supports error detection on a cell basis instead of on a transport stream basis, which improves performances when cell loss occurs.

In order to further simplify the demultiplexing process, each block of data cells can be provided with an extra starting byte, called a status byte, which is used to transfer information concerning the data block.

As stated above, the status byte can be designed in different ways. However, it is necessary, if demultiplexing is to be effected on a 'cell basis', to indicate the channel (and by that the VCI) over which the respective cell has been transmitted. Typically only a small number of channels need to be distinguished, for instance up to 16, in a broadband multimedia terminal, i.e. the whole 'VCI-range' need not be represented. It is also desirable that the status byte should be used to indicate if the data block contains a MPEG-2 packet header by reserving a bit which functions as a 'packet start flag'.

It will be directly evident from the foregoing description that the present invention implies an ATM-adaption of demultiplexing of the MPEG-2 system layer. Furthermore use of the MPEG-2 decoder of the present invention, makes it possible to, among other things, effect a reduction in delay variations, extend the possibilities for use of VCI, and allow demultiplexing on ATM cell basis instead of on MPEG-2 packet basis.

Thus, a MPEG-2 decoder, according to the present invention, for use with data packet transmission systems, has an architecture for implementation of ATM-adapted system layer demultiplexing in MPEG-2. The ATM-adapted system layer demultiplexing process of the present invention can be used in decoders, or terminals, for audiovisual communication, or distribution, based on MPEG-2 over ATM, for example, terminals according to ITU-T Rec H.310

In particular, it will be seen from the foregoing description of a MPEG-2 decoder for use with ATM transmission systems, that MPEG-2 system layer decoding includes demultiplexing and decoding of the different elementary streams contained within the system layer, that AAL SAR-PDU payload units, extracted from ATM cells, are converted into MPEG-2 data packets, and that the decoder is adapted to convert the AAL SAR-PDU payload units into MPEG-2 data packets, on a cell basis, as part of said MPEG-2 demultiplexing. Furthermore, it will be seen that the AAL SAR-PDU payload units, which are converted, on a cell basis, into MPEG-2 data packets, as part of said MPEG-2 demultiplexing, include a status byte for transferring information concerning a respective data packet, and that each of said status bytes indicate, by means of a VCI, the channel over which an associated cell has been transmitted. The status bytes may also indicate if an associated data block contains a MPEG-2 packet header.

The present invention also provides a broadband multimedia system for audiovisual communication, or distribution, which includes two MPEG-2 broadband multimedia terminals, outlined in preceding paragraphs; and an ATM transmission system, for the transmission of data packets between the two MPEG-2 terminals.

## Claims

1. A MPEG-2 encoder for use with ATM transmission systems and having an architecture for implementation of ATM-adapted system layer multiplexing in MPEG-2, said encoder including
a multiplexing unit for packeting and multiplexing audio and video signals in accordance with MPEG-2 and for generating a MPEG-2 transport stream for application to an ATM Adaption Layer, subsequently abbreviated as AAL, wherein said multiplexing unit is adapted to divide each MPEG-2 data packet, in said MPEG-2 transport stream, into a number of separate data packets for application to said AAL, **characterised in that** said multiplexing unit is adapted to a add a status byte comprising information about the content of said data packet, to each of said separate data packets prior to transmission to said AAL.

2. A MPEG-2 encoder as claimed in claim 1, **characterised in that** each MPEG-2 data packet, in said MPEG-2 transport stream, is divided into four data packets.

3. A MPEG-2 encoder as claimed in claim 2, **characterised in that** each MPEG-2 data packet, in said MPEG-2 transport stream, contains 188 bytes and **in that** each MPEG-2 data packets is divided into four data packets each containing 47 bytes.

4. A MPEG-2 encoder as claimed in any preceding claim, **characterised in that** said multiplexing unit is adapted to transmit each of the data packets, divided out of a MPEG-2 data packet in said MPEG-2 transport stream, over a different virtual channel.

5. A MPEG-2 encoder as claimed in any preceding claim, **characterised in that** division of each MPEG-2 data packet, in said MPEG-2 transport stream, into a number of separate data packets is effected as an integral part of MPEG-2 packeting and multiplexing.

6. A method for implementation of ATM-adapted system layer multiplexing in MPEG-2 encoders including a multiplexing unit for packeting and multiplexing audio and video signals in accordance with MPEG-2 and for generating MPEG-2 transport stream for application to an ATM Adaption Layer (AAL), wherein said method includes the steps of
dividing each MPEG-2 data packet, in said MPEG-2 transport stream, into a number of separate data packets for application to said AAL, **characterised by** the steps of
adding a status byte comprising information about the content of said data packet, to each of said separate data packets prior to transmission to said AAL.

7. A method as claimed in claim 6, **characterised by** the step of dividing each of said MPEG-2 data packets into four data packets.

8. A method as claimed in claim 7, **characterised in that** said MPEG-2 data packet contains 188 bytes and **in that** each of said data packets, divided out of a MPEG-2 data packet, contains 47 bytes.

9. A method as claimed in any of claims 6 to 8, **characterised by** the step of transmitting each of the data packets, divided out of a MPEG-2 data packet, over a different virtual channel.

10. A method as claimed in any of claims 6 to 9, **characterised by** effecting the division of each MPEG-2 data packet, in said MPEG-2 transport stream, into a number of separate data packets as an integral part of MPEG-2 packeting and multiplexing.

## Patentansprüche

1. MPEG-2-Codierer zur Verwendung in ATM-Übertragungsystemen und mit einer Architektur zur Implementierung von ATM-angepasstem Systemschichtmultiplexen in MPEG-2, wobei der Codierer aufweist:
eine Multiplexeinheit zum Paketieren und Multiplexen von Audio- und Videosignalen gemäß MPEG-2 und zum Erzeugen eines MPEG-2-Transportstroms zur Anwendung an einer ATM-Anpassungsschicht (ATM-Adaption Layer), im Nachfolgenden als AAL abgekürzt, wobei die Multiplexeinheit so ausgebildet ist, dass sie jedes MPEG-2-Datenpaket in dem MPEG-2-Datenstrom in eine Anzahl von separaten Datenpaketen zur Anwendung in der AAL teilen kann, **dadurch gekennzeichnet, dass** die Multiplexeinheit so ausgebildet ist, dass sie ein Status-Byte, welches Informationen über den Inhalt des Datenpakets enthält, jedem der separaten Datenpakete vor der Übertragung auf die AAL hinzufügen kann.

2. MPEG-2-Codierer nach Anspruch 1, **dadurch gekennzeichnet,**
**dass** jedes MPEG-2-Datenpaket in dem MPEG-2-Transportstrom in vier Datenpakete unterteilt wird.

3. MPEG-2-Codierer nach Anspruch 2, **dadurch gekennzeichnet,**
**dass** jedes MPEG-2-Datenpaket in dem MPEG-2-Transportstrom 188 Bytes enthält und dass jedes MPEG-2-Datenpaket in vier Datenpakete unterteilt wird, die jeweils 47 Bytes enthalten.

4. MPEG-2-Codierer nach einem der vorstehenden Ansprüche, **dadurch gekennzeichnet, dass** die Multiplexeinheit so ausgebildet ist, dass sie jedes der Datenpakete, in welche ein MPEG-2-Datenpaket in dem MPEG-2-Transport-strom unterteilt worden ist, über einen anderen virtuellen Kanal überträgt.

5. MPEG-2-Codierer nach einem der vorstehenden Ansprüche, **dadurch ge** - **kennzeichnet,** dass die Teilung jedes MPEG-2-Datenpaketes in dem MPEG-2-Transportstrom in eine Anzahl von separaten Datenpaketen als ein integraler Teil des MPEG-2-Paketierens und -Multiplexens bewirkt wird.

6. Verfahren zur Implementierung des ATM-angepassten Systemschichtmultiplexens in MPEG-2-Codierern, die eine Multiplexeinheit zum Paketieren und Multiplexen von Audio- und Videosignalen in Übereinstimmung mit MPEG-2 und für die Erzeugung eines MPEG-2-Transportstroms zur Anwendung an einer ATM-Anpassungsschicht (AAL) enthält, wobei das Verfahren die Schritte aufweist
Teilen jedes MPEG-2-Datenpakets in dem MPEG-2-Transportstrom in eine Anzahl von separaten Datenpaketen zum Anwenden an AAL, **gekennzeichnet durch** die Schritte
Hinzufügen eines Status-Bytes, das Information über den Inhalt dieses Datenpaketes enthält, zu jedem der separaten Datenpakete vor dem Übertragen auf die AAL.

7. Verfahren nach Anspruch 6, **gekennzeichnet durch** den Schritt Teilen jedes der MPEG-2-Datenpakete in vier Datenpakete.

8. Verfahren nach Anspruch 7, **dadurch gekennzeichnet, dass** das MPEG-2-Datenpaket 188 Bytes enthält und dass jedes der Datenpakete, in welche das MPEG-2-Datenpaket geteilt ist, 47 Bytes enthält.

9. Verfahren nach einem der Ansprüche 6 bis 8, **gekennzeichnet durch** den Schritt
Übertragen jedes der Datenpakete, in die ein MPEG-2-Datenpaket unterteilt worden ist, über einen anderen virtuellen Kanal.

10. Verfahren nach einem der Ansprüche 6 bis 9, **gekennzeichnet durch**
Bewirken des Teilens jedes MPEG-2-Datenpakets in dem MPEG-2-Trans-portstrom in eine Anzahl von separaten Datenpaketen als einem integralen Teil des MPEG-2-Paketierens und -Multiplexen.

## Revendications

1. Codeur MPEG-2 destiné à être utilisé avec des systèmes de transmission en mode ATM et présentant une architecture destinée à assurer la mise en oeuvre du multiplexage de couche de système adapté au mode ATM dans MPEG-2, ledit codeur comportant :
une unité de multiplexage destinée à assurer la mise en paquet et le multiplexage de signaux audio et vidéo selon MPEG-2 et à produire un flux de transfert MPEG-2 à appliquer sur une couche d'adaptation au mode ATM, désignée ultérieurement par l'abréviation AAL, dans lequel ladite unité de multiplexage est adaptée de manière à diviser chaque paquet de données MPEG-2, dans ledit flux de transfert MPEG-2, en un certain nombre de paquets de données distinctes à appliquer sur ladite couche AAL, **caractérisé en ce que** ladite unité de multiplexage est adaptée afin d'ajouter un octet d'état comprenant des informations concernant le contenu dudit paquet de données, à chacun desdits paquets de données distincts avant la transmission à ladite couche AAL.

2. Codeur MPEG-2 selon la revendication 1, **caractérisé en ce que** chaque paquet de données MPEG-2, dans ledit flux de transfert MPEG-2, est divisé en quatre paquets de données.

3. Codeur MPEG-2 selon la revendication 2, **caractérisé en ce que** chaque paquet de données MPEG-2, dans ledit flux de transfert MPEG-2, contient 188 octets et **en ce que** chaque paquet de données MPEG-2 est divisé en quatre paquet de données contenant chacun 47 octets.

4. Codeur MPEG-2 selon l'une quelconque des revendications précédentes, **caractérisé en ce que** ladite unité de multiplexage est adaptée afin de transmettre chacun des paquets de données, divisé à partir d'un paquet de données MPEG-2 dans ledit flux de transfert MPEG-2, sur un canal théorique différent.

5. Codeur MPEG-2 selon l'une quelconque des revendications précédentes, **caractérisé en ce que** la division de chaque paquet de données MPEG-2, dans ledit flux de transfert MPEG-2, en un nombre de paquets de données distincts est réalisée en tant que partie intégrante de la mise en paquet du multiplexage de MPEG-2.

6. Procédé de mise en oeuvre du multiplexage de couche de système adapté au mode ATM dans des codeurs MPEG-2 comportant une unité de multiplexage destinée à mettre en paquet et à multiplexer des signaux audio et vidéo selon MPEG-2 et à produire un flux de transfert MPEG-2 à appliquer sur une couche d'adaptation au mode ATM (couche AAL), dans lequel ledit procédé comporte les étapes de :
division de chaque paquet de données MPEG-2, dans ledit flux de transfert MPEG-2, en un nombre de paquets de données distincts à appliquer à ladite couche AAL, **caractérisé par** les étapes de :
ajout d'un octet d'état comprenant des informations concernant le contenu dudit paquet de données, à chacun desdits paquets de données distincts avant sa transmission à ladite couche AAL.

7. Procédé selon la revendication 6, **caractérisé par** l'étape de division de chacun desdits paquets de données MPEG-2 en quatre paquets de données.

8. Procédé selon la revendication 7, **caractérisé en ce que** ledit paquet de données MPEG-2 contient 188 octets et **en ce que** chacun desdits paquets de données, divisé à partir d'un paquet de données MPEG-2, contient 47 octets.

9. Procédé selon l'une quelconque des revendications 6 à 8, **caractérisé par** l'étape de transmission de chacun des paquets de données, divisé à partir d'un paquet de données MPEG-2, sur un canal théorique différent.

10. Procédé selon l'une quelconque des revendications 6 à 9, **caractérisé par** la réalisation de la division de chaque paquet de données MPEG-2, dans ledit flux de transfert MPEG-2, en un nombre de paquets de données distincts en tant que partie intégrante de la mise en paquet et du multiplexage de MPEG-2.
